(19) Europäisches Patentamt
European Patent Office
Office européen des brevets

(11) **EP 1 717 669 A1**

(12) **EUROPEAN PATENT APPLICATION**

(43) Date of publication:
**02.11.2006 Bulletin 2006/44**

(51) Int Cl.:
**G06F 3/033** (2006.01)

(21) Application number: **05009141.2**

(22) Date of filing: **26.04.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Wu, Chung-Ming**<br>  **Hsin Shih Hsiang, Tainan County (TW)**<br>• **Luo, Ching-Hsing**<br>  **Chug-Ho, Taipei (TW)** |
| (71) Applicants:<br>• **Chic Technology Corp.**<br>  **Taipei (TW)**<br>• **Luo, Ching-Hsing**<br>  **Tapei (TW)** | (74) Representative: **Wehnert, Werner et al**<br>**Schwanthalerstrasse 106**<br>**80339 München (DE)** |

(54) **Highly sensitive inertial mouse**

(57)    The present invention relates to a highly sensitive inertial mouse and in particular to one using an MEMS(Micro-Electrical-Mechanical System)inertial sensitive principle to produce a highly sensitive computer mouse; the mouse uses MEMS inertial sensitive principle including a two-dimensional or three-dimensional inertial sensors or accelerometers and with the use of signal processing methods such as collecting of data, noise cancellation, setting of threshold of dead zone, tracking of baseline, calculation of displacement and adjustment of sensitivity and so on, enable the MEMS sensor acting as the manufacturing component of a computer mouse and hence, the present invention is not only light and energy saving, but also obviates the drawbacks of high power consumption of optics mice or easy-dirt collection of roller mice. Further, with the increase in sensitivity, the bottleneck in the manufacturing of inertial mouse is overcome such that the functions of MEMS inertial mouse is very stable and reliable and can smoothly make its way in the market and let everyone share and feel the advantages.

FIG. 8

**Description**

**BACKGROUND OF THE INVENTION**

1. Field of the invention

The present invention relates to a highly sensitive inertial mouse and in particular to one using MEMS inertial sensitive principle to produce a highly sensitive computer mouse.

2. Description of the related art

Reference: American Patent No. 4,787,051 "Inertial mouse system" as described in the copies of documents attached. Recently, the manufacturing of computer mice is mainly either roller or optics mice and both apply optics principle to detect the mouse displacement. The roller method is detected by a turning optical encoder disk whereas the optics mouse uses an optical image processing skill requiring large power consumption and displacement cannot be detected on a transparent and smooth surface. Laser optics mice have been introduced on the market nowadays to solve the problem of transparent and smooth surface but apart from using optics technique in the manufacturing of computer mice, no other technically made mouse has been used on the market.

Most MEMS inertial sensors are used to detect acceleration and are sometimes known as accelerometer and the application of MEMS inertial sensor for displacement detection in the manufacturing of computer mice has been published in the academic journals but hasn't been put on the market yet.

After a long research of the present invention, it has been found that the bottleneck of manufacturing inertial mice is not the lack of sensitivity of the inertial sensor itself but the signal processing problem causing instability. Hence, it cannot be released on the market.

The MEMS accelerometer sold nowadays on the market mainly adopts differential capacitance or differential resistance to detect inertial acceleration that is converted to digital signal by the A/D (Analog to digital) converter and the signal output format can be pulse frequency and pulse width. Pulse frequency is to represent the magnitude and direction of acceleration by low and high pulse frequency; and pulse width uses width to represent the magnitude and direction of acceleration. For example, the inertial sensor developed by FORD company transmits basic frequency of zero acceleration at 250kHz and the positive acceleration increases the frequency while the negative acceleration decreases the frequency. For example, Analog Devices company bases zero acceleration at half pulse width and a positive acceleration will cause an increase in pulse width whereas a negative acceleration will cause a decrease in pulse width.

**SUMMARY OF THE INVENTION**

The present invention relates to a highly sensitive inertial mouse mainly including collecting of data, noise cancellation, setting of threshold of dead zone, tracking of baseline, calculation of displacement and adjustment of sensitivity being the six basic signal processing principles wherein: the collecting of data converts the signal provided by the inertial sensor, amplifier and A/D converter into accurate acceleration data for further signal processing.

The present invention relates to a highly sensitive inertial mouse mainly including collecting of data, noise cancellation, setting of threshold of dead zone, tracking of baseline, calculation of displacement and adjustment of sensitivity being the six basic signal processing principles wherein: the noise cancellation uses all kinds of noise canceling techniques in order to decrease internal and external noise thus increasing sensitivity.

The present invention relates to a highly sensitive inertial mouse mainly including collecting of data, noise cancellation, setting of threshold of dead zone, tracking of baseline, calculation of displacement and adjustment of sensitivity consisting the six basic signal processing principles wherein: the setting of threshold of dead zone is done at the upper and lower range of the baseline at zero acceleration such that it is impossible to calculate the displacement of the acceleration noise inside the set threshold of the baseline, enforcing the acceleration and displacement to be zero and the area within the threshold is known as the dead zone and any unwanted jitters caused by noise will be eliminated. The setting of the threshold of dead zone can be set as static or dynamic.

The present invention relates to a highly sensitive inertial mouse mainly including collection of data, noise cancellation, setting of threshold of dead zone, tracking of baseline, calculation of displacement and adjustment of sensitivity consisting the six basic signal processing principles wherein: the tracing of baseline uses all kinds of techniques for dynamic tracing of the baseline of the inertial sensor at zero acceleration, eliminates any baseline movement caused by a drift in the sensor of the baseline itself or rough operating table surface in order to avoid miscalculations and unexpected displacements.

The present invention relates to a highly sensitive inertial mouse mainly including collection of data, noise cancellation, setting of threshold of dead zone, tracking of baseline, calculation of replacement and adjustment of sensitivity consisting the six basic signals processing principles wherein: the calculation of displacement starts as soon as signal exits the threshold of dead zone. Setting of threshold of dead zone is cancelled once the displacement calculation has started no matter whether the acceleration signal is inside or outside the threshold of dead zone. Then, all kinds of techniques are applied to detect if the action is completed and has stopped in order to recover the setting of threshold of dead zone. Further, one inertial sensor can only detect translational acceleration and is only suitable for calculation of translational displacement, and an angular acceleration has to be further detected or calculated in order to correctly obtain non-translational displacement or the displacement containing angular acceleration.

The present invention relates to a highly sensitive inertial mouse mainly including collection of data, noise cancellation, setting of threshold of dead zone, tracing of baseline, calculation of displacement and adjustment of sensitivity consisting the six basic signals processing principles wherein: the adjustment of sensitivity, a transfer function is designed between the inertial displacement and computer cursor displacement such that a small movement range in the inertial mouse is relative to a large movement range in the screen monitor with a high resolution.

## A BRIEF DESCRIPTION OF DRAWINGS

Fig.1 (a) the magnitude of acceleration noise highly due to external noise;

(b) velocity is calculated from acceleration;
(c) displacement is calculated from velocity.

Fig.2 (a) using averaging technique to decrease the magnitude of acceleration noise;

(b) velocity is calculated from acceleration;
(c) displacement is calculated from velocity.

Fig.3 (a) single rightwards displacement of inertial signal under no setting of threshold;

(b) velocity is calculated from acceleration;
(c) displacement is calculated from velocity.

Fig.4 (a) a threshold of dead zone setting of 25mg is added to a single rightwards displacement inertial signal;

(b) velocity is calculated from acceleration;
(c) displacement is calculated from velocity.

Fig.5 (a) incorrect displacements caused by lack or incorrect tracing of baseline;

(b) velocity is calculated from acceleration;
(c) displacement is calculated from velocity;
(d) acknowledgement of displacement signal.

Fig.6 (a) correct tracing of baseline will not lead to incorrect displacements;

(b) velocity is calculated from acceleration;
(c) displacement is calculated from velocity;
(d) acknowledgement of displacement signal.

Fig.7 (a) deviation situation of baseline of a highly sensitive inertial mouse signal;

(b) velocity is calculated from acceleration, a failure in tracing of baseline causing an accumulation of wrong acceleration;
(c) displacement is calculated from velocity, the whole displacement action is concealed by the wrong detection of the baseline.

Fig.8 (a) baseline deviation of a highly sensitive inertial mouse signal;

(b) velocity is calculated from acceleration, a successful tracing of baseline eliminates accumulation of wrong accelerations;

(c) displacement is calculated from velocity, the whole displacement action is obvious.

Fig.9 (a) zone division of a rightwards displacement signal;

(b) zone division of a leftward displacement signal.

## DETAILED DESCRIPTION OF INVENTION

The manufacturing method of the present mouse should all have the following data processing methods:

(1) Collecting of data

Due to A/D converter converting analog signal of inertial sensor to different forms of digital signal, some are indicated by the frequency like FORD company; some are indicated by pulse width like Analog Device company (known as AD company); some are output by serial signals and some by parallel signals. To sum up, the different forms of signals have to be converted to a practical data representing inertial acceleration before any further signal processing. For example, for frequency signals, just connect the signals to the counter to count the number of passing pulses in every 10msec and the magnitude of inertial acceleration will be known. This also applies to AD inertial sensor using an internal oscillator and counter to calculate the duration of pulse width and further use the formula provided by AD companies to convert pulse width to practical acceleration data for further signal processing.

(2) Noise cancellation

The noise magnitude of most micro-inertial sensors are generally smaller than $0.6mg/\sqrt{Hz}$, and if practical operation bandwidth is 100Hz (that is 3dB frequency of low-pass filter), noise magnitude is then $0.6mg*\sqrt{100}*1.5 = 7.35mg$. The 7.35 mg noise affects the whole system's sensitivity and hence, some techniques have to be applied to increase sensitivity in order to obviate the drawback for tiny displacement of the inertial sensor. For 100Hz operating bandwidth, corresponding to most human beings' exercising velocity, one data output is produced every 10msec and noise magnitude is tripled ($3*7.35mg=22mg$) to obtain the threshold of dead zone whereby the smallest distance variation detected within 10msec is $0.5*22mg*(10msec)^2=10.78\ \mu m$. For modern optics mice with high specification 800dpi, the resolution reached is 32 $\mu$m for every pixel. Hence, the location resolution reached by the inertial mouse is much than the optics mouse and the converted specification for optics mouse or roller mouse can amount to 2360dpi.

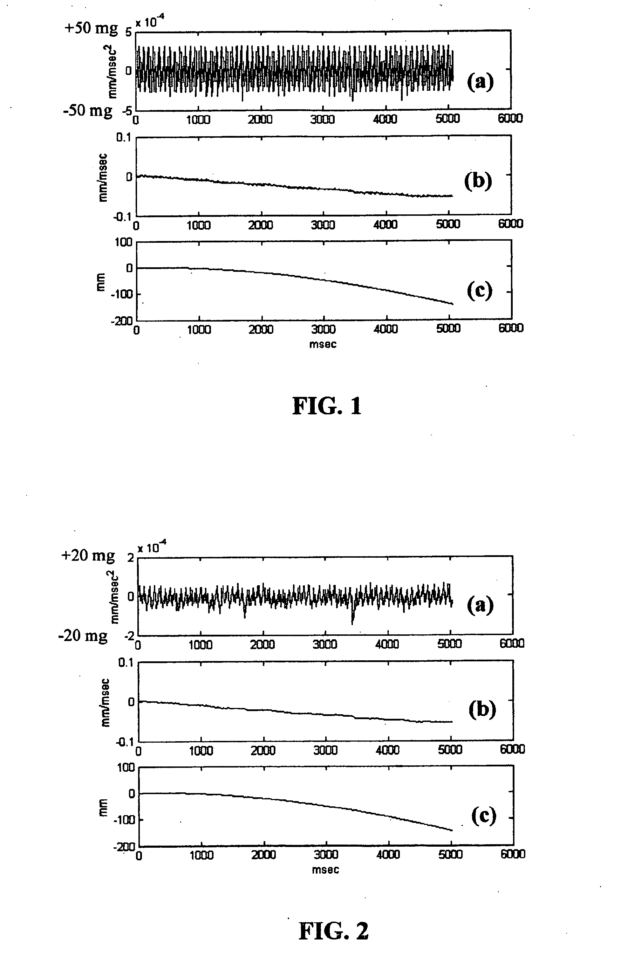

Further, due to manufacturing technique of inertial mice, especially differential capacitance method easily affected by external interference, there are intruding external noise apart from the original internal 7.35 mg noise. Figure 1 shows a situation of external intruding noise for a low noise inertial sensor whereby the noise magnitude is 40mg, 5.32 times higher than the original internal noise and therefore the threshold of dead zone has to be also increased 5.32 times thus attaining 120mg and the location resolution will be decreased to 440dpi. Hence, the most important function of the inertial sensor used to be computer mouse is to eliminate noise and the cancellation techniques are abundant and very mature. Generally, the analog signals of the inertial sensor are converted to digital signal by A/D converter and a filter is usually added before converting in order to eliminate high frequency noise. The noise cancellation after converting can be done by software and therefore digital filter or other skill can also be used. Fig.2 shows the averaging noise cancellation method wherein neighboring signals are added and averaged, resulting in a noise decrease from 40mg to 8 mg (expect a few pulse noise magnitude up to 12mg), almost 5 times decrease, such that the noise magnitude is pulled back to its original standard level. Therefore, noise cancellation is a necessary technique in the inertial mouse system.

(3) Setting of threshold of dead zone

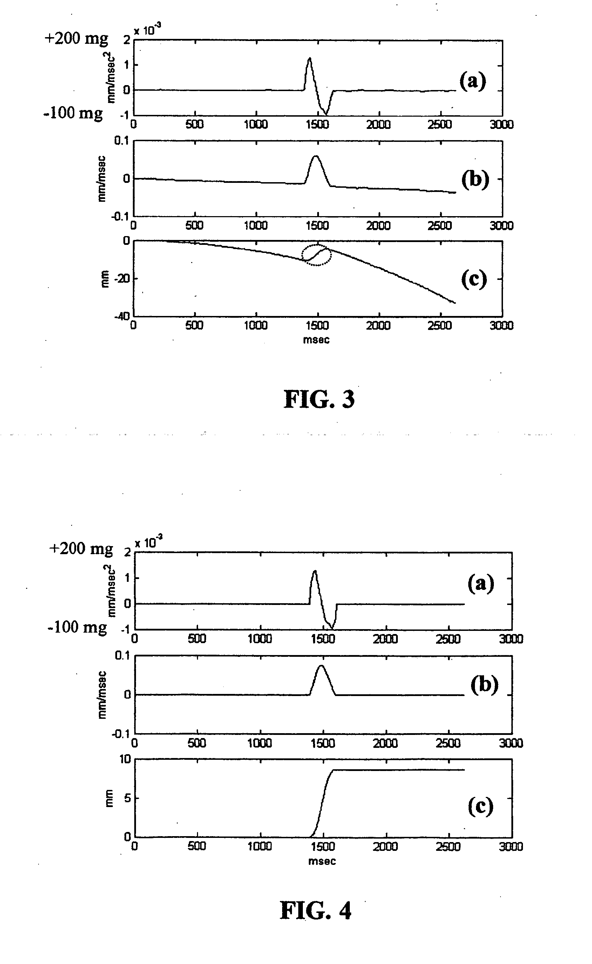

Since the inertial sensor is to detect acceleration, the sensed signal is acceleration data and displacement distance has to be calculated at any time, assuming the initial acceleration is zero, location displacement is $0.5at^2$ (a is the acceleration, t is the time). Therefore, even noise is acceleration data and has to be set in the threshold of dead zone such that the noise signal in the threshold is not considered for displacement calculation avoiding distance displacement or jitter of the immobile mouse, thus differing from the optics mouse. This is because the optics mouse directly detects distance and since distance is not moving, it is not moving, so it is not necessary to set a threshold of dead zone. Therefore, the setting of the threshold of dead zone is an important function if inertial sensors are used for computer mice. Figures 3 and 4 indicate the validity of the setting of threshold of dead zone and without the setting, there will be some location deviation by noise during the immobile status even bigger than that of the real location deviation. In Fig. 3 showing a single displacement of the mouse to the right, signal (3 (a)) is measured then velocity calculated by using acceleration (3(b)), $v=v_0+at$, ($v_0$ is the initial velocity), then displacement is calculated from velocity (3(c)), $1 =v_0t+0.5at^2$). There is no setting of threshold of dead zone in Fig.3 while setting is 25mg in Fig.4. It is obvious in Fig.3 that the real displacement signal (circular dotted line) is buried inside the dead zone noise displacement. Hence, the setting of the threshold of dead zone is an important function in the manufacturing of computer mice using inertial sensors, regardless of its dynamic or static status. The static status means that the threshold never moves while the threshold in the dynamic setting can be changed according to environment noise situation. In the dynamic status, setting can be set as the standard deviation of noise more than or equally doubled but sometimes, due to limitations in the resolution of MEMS devices or A/D converter, the standard deviation of noise can be zero and therefore, a specific range has to be then automatically set to avoid a zero dynamic threshold situation.

(4) Tracing of baseline

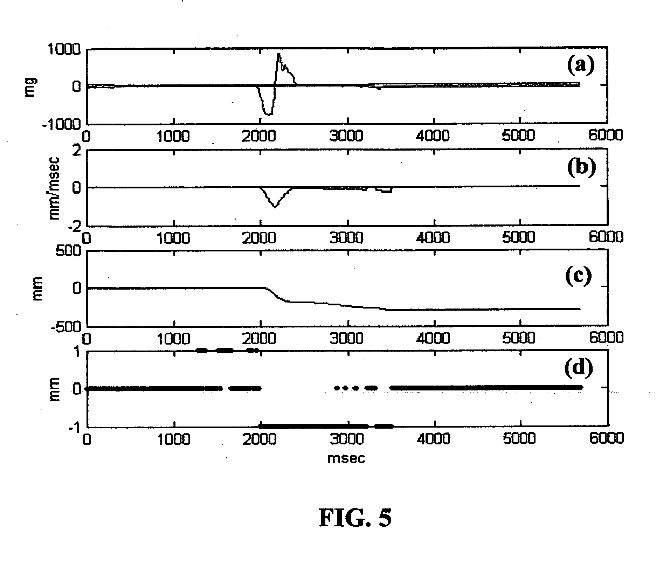

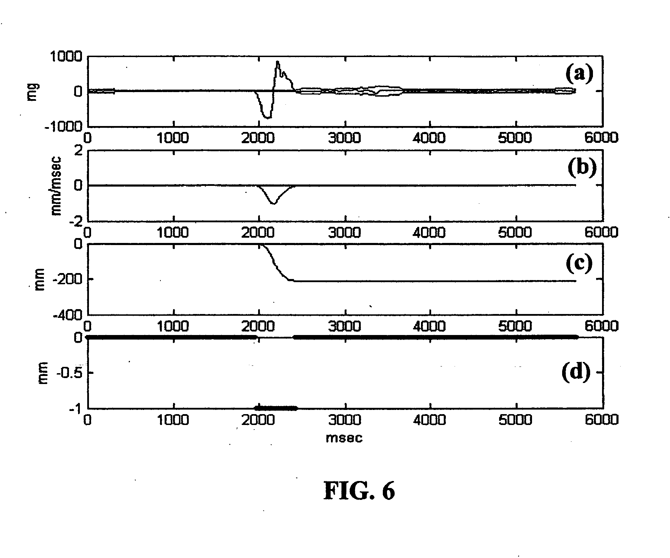

Since all inertial sensors are somewhat manufactured differently, every baseline at zero acceleration is different and therefore, it is necessary to fmd the baseline for each inertial sensor because noise and displacement signal are added to the baseline. Hence, the baseline signal has to be first eliminated before calculating the magnitude of noise and displacement signal. In the dead status, averaging method is proceeded by integrating two or more signals and then averaging them to obtain the baseline. Why is the inertial sensor then important in a computer mouse for the tracing of baseline? There are two reasons for this: firstly, one drawback of the sensor is the drift of the baseline and the tracing of baseline is required in order to avoid influencing the setting of the threshold of dead zone. Secondly, the smoothness of the operating table surface has to be considered because inertial sensors measure acceleration and earth gravity itself normally contains acceleration. If the inertial sensor's detection angle is horizontal with zero degree, there is then no influence of earth gravity and the baseline should be zero acceleration. However, it is almost impossible for a table surface to be horizontal with zero degree and even the table itself is not completely flat at the same plane. The baseline will therefore move according to location displacement and angle of table surface and movement is even more serious than the original internal baseline drift. Hence, the tracing of baseline is a very important function in the manufacturing of computer mice using inertial sensors. Fig.5 (a) shows a situation whereby the baseline drift according to horizontal surface or internal features and without tracing of baseline, error displacement will take place and the error displacement distance surpasses normal signal, as shown in Fig.5 (c). Further, several unwanted miscalculations of displacement signal can be clearly seen in Fig.5 (d). Fig.6 shows one of the baseline tracing techniques of the present invention wherein a window capacity of 30 data is used in the threshold of dead zone in order to decrease noise to almost zero and obtain a baseline data by averaging method. Therefore, the baseline has to be deducted from the inertial sensor signal in order to calculate noise magnitude (such as standard deviation), then multiply the noise magnitude by a certain multiple (for example 3 multiple) to obtain the threshold of dead zone. Hence, after the inertial sensor is newly set, a temporary baseline and a large dead threshold (for example 50mg) are set, the window size simultaneously calculates average value and increases capacity to 30 data such that average value is calculated from the fixed window size of 30 data. If a data is collected every 10msec, the computer mouse gets into the normal operation status within0.3 sec once reset or power on and can therefore trace baseline and calculate threshold of dead zone. We can understand the tracing of baseline and setting of threshold of dead zone in Fig.6 (d) whereby unwanted miscalculations of displacement signals are eliminated such that the inertial mouse can precisely calculate the user's displacement movement (Fig.6 (c)). The window size is not necessarily limited to 30 data and a fixed number can be detected in the dead status or an unfixed number can be dynamically set according to noise magnitude. However, there should be at least two data and the data are entered in the window by the first- in-first-out (FIFO) method.

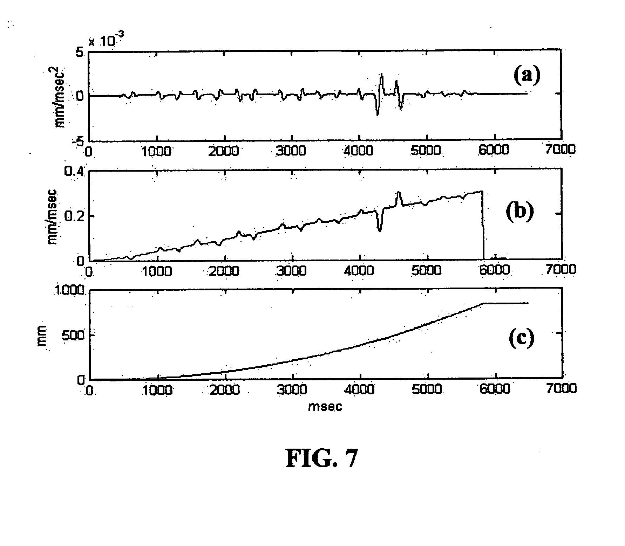

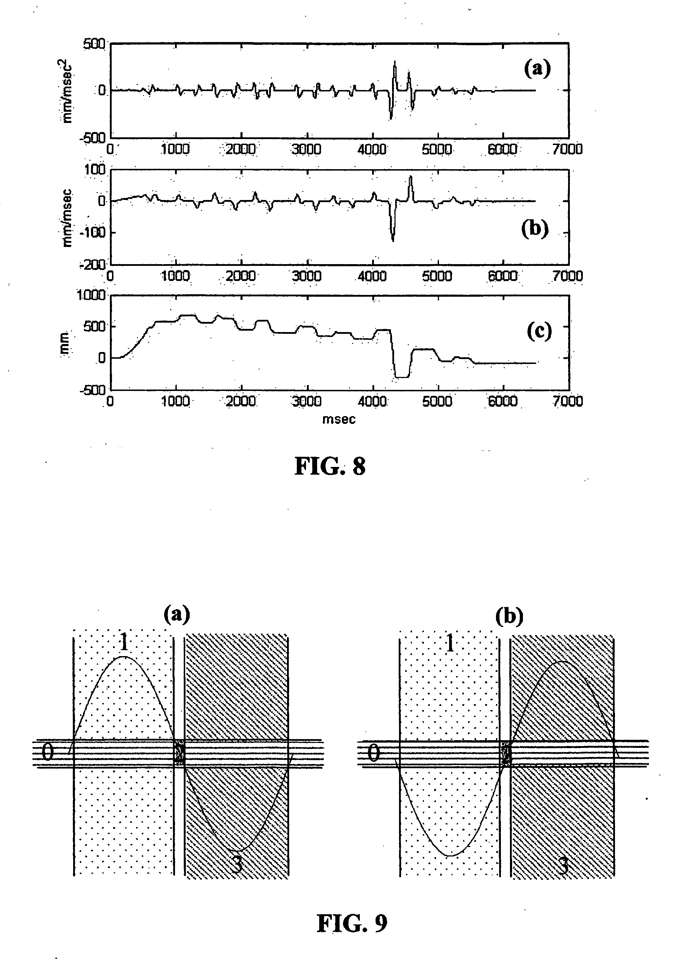

Any signal surpassing the threshold of dead zone does not represent noise and refers to displacement signal and is not included in the calculation of baseline and function of tracing of baseline can only be activated when signal re-enters the threshold of dead zone. This is also shown in Fig.6 after signal displacement wherein baseline can be precisely retraced such that the mouse is not moving. Further, when the threshold of dead zone is very low (for example, below 10mg), the baseline of inertial sensor itself is drifting and with rough operation table surface, the magnitude change in the baseline resulting from the location movement of the mouse surpasses the threshold of dead zone making it impossible to apply the above-mentioned window method to trace baseline of the acceleration signals, please refer to Fig.7 showing a large drift resulting from a failure in tracing of baseline under a low threshold setting. Apart from the above-mentioned window baseline tracing technique of the present invention, followed by a symmetrical aspect of the inertial acceleration (please refer to Fig.3(a) or Fig.4 (a) showing a symmetrical upper and lower area of the acceleration signal and further, to the description below) and the minute aspect of the signal change in the dead zone (change in acceleration signal is very tiny in the dead zone), resolving the problem of baseline tracing after signal displacement in a low threshold setting. As shown in Fig.8, when displacement occurs, the upper and lower area of the inertial signal is almost equivalent and the magnitude change of the inertial signal is smaller than the multiple of standard deviation of noise. If the inertial signal minus baseline still surpasses the threshold of dead zone, a new baseline is traced such that the inertial sensor is able to avoid the deviation error of the baseline surpassing practical movement displacement under a low threshold of dead zone (below 10mg), as shown in Fig.7 (b) and (c), and still able to detect movement displacement, as shown in Fig.8 (b) and (c). The ability to increase the sensitivity of inertial mice to 4000dpi brings computer mice to a new generation.

(5) Displacement calculation

Figs.3 (a) and 4 (a) show a certain displacement to the right of the inertial mouse before coming to a stop and the inertial accelerated signal is detected. It can be seen in the diagram that the inertial sensor first detects positive acceleration signal before the negative one and then stops. The area below the positive and negative acceleration is almost equivalent and the displaced signal passes through the threshold of dead zone and in order to avoid misjudging as noise, Fig.9 separates single displacement into four zones namely zone 0, 1, 2, 3, represented by a label. Since the original setting is found in the threshold of dead zone, the zone label is set to 0 and the acceleration signal is also 0 meaning that the mouse is not moving. When the displacement signal surpasses the threshold of dead zone for the first time, the zone label is 1; when the displacement signal re-enters the threshold of dead zone, the zone label is 2; when the signal departs the threshold of dead zone and enters the area symmetrical to the area 1 (opposite symbols), the zone label is 3; when signal returns to the threshold of dead zone, single movement displacement is completed and the zone is newly set as 0. The above-mentioned zones 0, 1, 2, 3 successively analyses human movement of the mouse and we can separate displacement signal and quiescent noise in order to increase preciseness of displacement calculation and avoid misjudging (mistaking quiescent noise as displacement signal). The above-mentioned separated zones will also be inefficient if the change in signal magnitude is too big causing the acceleration signal to directly move to zone 3 from zone 1 without passing through zone 2 such that the zone label stays at 1. Hence, in order to resolve this exception, a sign label is used to indicate whether the acceleration signal has already changed from positive to negative sign (i.e., higher to lower than baseline). If there is a change in the sign and the zone label remains at 1, this means that the acceleration signal has moved directly to zone 3 from zone 1 without passing through zone 2 and thus, the zone label is changed to 3 for normal operation. We can further understand from Fig.9 that the acceleration signal in zone 1, 2, and 3 are all used to calculate the movement displacement of the mouse (known as displacement). Assuming that the acceleration, velocity, displacement symbols at nth moment are $a_n$, $v_n$, $l_n$, then the acceleration and displacement calculated at (n+1)th moment is:

$$v_{n+1} = v_n + a_n * \Delta t_n \qquad (1)$$

$$l_{n+1} = l_n + v_n * \Delta t_n + 0.5 * a_n * (\Delta t_n)^2 \quad (2)$$

$\Delta t_n$ is the iteration time interval for distance calculation, and $\Delta t_n$ equals 10msec for bandwidth 100Hz.

Taking two-dimensional inertial mouse as example (for example x y plane surface), if only one two-dimensional inertial mouse is used, the above formulas (1) and (2) are suitable for calculation of translational acceleration and if angular acceleration is included in the displacement, there will be a miscalculation in the displacement obtained from the above-mentioned formulas. In order to solve the problem, angular acceleration has to be also measured in addition to the translational acceleration signal detected by the inertial sensor and it can be done in two methods: one method is to directly use gyroscope to measure one-dimensional (for example z axis) angular acceleration; and another method is to directly use a two-dimensional inertial sensor and at least a one-dimensional inertial sensor in x y plane surface and putting both in a defined x or y axis at a separate distance and applying the familiar formulas to both inertial signals located in the same coordinate axis for mutual deduction to obtain the angular acceleration (for example z axis). Then use the calculated or measured angular acceleration to proceed by displacement correction and as these correction formulas are mentioned in most teaching materials, reference is not made herewith.

(6) Adjustment of sensitivity

Most displacement range of the mouse are far smaller than the computer screen monitor and therefore there should be a transfer function of the mouse displacement distance and the computer screen monitor such that the displacement of the cursor on the monitor can simultaneously has minute displacement (reacting to practical high dpi) and high-speed or large-scale displacement. Generally, the displacement of the mouse ranges within $\pm 5$ cm square range and the computer screen ranges from 14 in" to 29 in" and therefore mouse displacement and screen cursor displacement are not in proportion 1:1. Roller mice and optics mice directly detect displacement and therefore transfer function can be easily simulated. However, the inertial sensor detects indirect displacement from acceleration and therefore the transfer function is different. The present invention separates the screen cursor and transfer function detected by the inertial displacement into several zones and each zone is designed with an independent transfer function to decide sensitivity of displacement of screen cursor.

Assuming inertial displacement is $1_n$ at $n^{th}$ times, the displacement of the screen cursor is relatively $S_n$ and the transfer function $G(1_n)$, as follows:

$$S_n = G(1_n), \text{ where}$$

$$G(1_n) = \begin{cases} C & ; \text{if } 1_n > S_3 \\ f_2(1_n) & ; \text{if } S_3 \geqq 1_n > S_2 \\ f_1(1_n) & ; \text{if } S_2 \geqq 1_n > S_1 \\ 0 & ; \text{if } |1_n| \leqq S_1 \\ -f_1(1_n) & ; \text{if } -S_2 \leqq 1_n < -S_1 \\ -f_2(1_n) & ; \text{if } -S_3 \leqq 1_n < -S_2 \\ -C & ; \text{if } 1_n < -S_3 \end{cases}$$

In the above chart, threshold $\pm S_1$, $\pm S_2$ and $\pm S_3$ separates the transfer function into 7 zones, positively and negatively symmetrical, and therefore the transfer function is $0 \cdot \pm f_1(x) \cdot \pm f_2(x) \cdot \pm C$. The positive and negative labels can also be unsymmetrical and the zones can be different in order to response to human temperament. Zone 0 relates to the dead zone and $S_1$ is the displacement of threshold of dead zone and not to the acceleration of threshold of dead zone of section (3). Generally, if an acceleration threshold of dead zone is designed, noise will not cause any unwanted displacements or jitters and hence, the displacement threshold of dead zone can be omitted unless there is any unexpected noise whereby the displacement threshold of dead zone has to be present in order to avoid unwanted displacements or jitters. $f_1(1_n)$ generally relates to the linear zone and is used to control the mouse's highest sensitivity, for example, if $f_n(1_n)=1_n$, then $S_n=1_n$. If the smallest detection distance of $1_n$ is 10 $\mu$m, the mouse's sensitivity can reach 2540dpi, and if it is too sensitive, $S_n=21_n$ can be applied such that sensitivity is decreased to 1270dpi. People will then be able to feel the sensitivity and it would be meaningless if sensitivity is too high and cannot be felt. There can be many linear zones in order to increase smoothness of displacement conversion. $f_2(1_n)$ generally relates to the speed up zone and can be $f_2(1_n)=a1_n^2$ (for instance) wherein a is a constant and has to be tested to decide if speed up is appropriate. $\pm C$ relates to the displacement limiting zone and is used to limit the largest displacement conversion in order to avoid too big conversions resulting in unstable displacement of the mouse and C is a constant. In most cases, the limit of zone separating is not consistent since some zones can be increased, decreased, adjusted or suppressed according to the characteristics of the inertial sensor. No matter what, displacement conversions is important because 1g acceleration obtained after great effort can only make the mouse moved 2.2 cm within 0.3 sec (single displacement interval by human). Most a mouse is moved with around 100mg and can only move 0.22 cm in 0.3 sec. Therefore, the adjustment of sensitivity is an important step in the manufacturing of inertial mouse to match with human's habits. For an extreme comfortable use, the division of the converting zones can be increased in order to obtain the best ergonomic design and adaptive or pseudo-neural networks can even be entered to study human habits to attain the best personal service.

Referring to the above proof, we can understand that the biggest bottleneck of using an inertial sensor in manufacturing a computer mouse is not due to the sensitivity of the inertial sensor itself or the quality of A/D converter because noise of every inertial sensing chips (inertial sensor in addition to A/D converter) produced by each company is lower than that of any present mouse on the market (with better dpi) in additional to the advantages of high acceleration operation. The biggest bottleneck is associated to the description of the present invention about the signal processing after the inertial signal has been fetched. The six signal processing principles of the present invention mentioned above are namely collection of data, noise cancellation, setting of threshold of dead zone, tracing of baseline, calculation of displacement and adjustment of sensitivity. The present invention provides possible resolving techniques for each of the said principles, ascertain the importance of their success and creates the first MEMS mouse manufactured in mass production in the whole world marked and patent is hereby applied for the said six basic principles. These six principles use 1-, 2- or even 3- dimension displacement detection such that the mouse is able to enter 3-dimensional displacement detection from 2-dimensional displacement detection, and in other words, plane surface enters 3-dimensional space allowing application of computer mice to enter the new generation. Optics mouse cannot catch up even with great improvement.

For a 2-dimensional mouse working on a plane surface, a click or ON/OFF switch is used to determine whether the mouse leaves off the working table surface. If the 2-dimensional mouse leaves off the table surface, the switch is in the OFF state automatically and the displacement calculation is also turned off to stop the mouse or cursor movement in the computer screen. On the contrary, the mouse works normally as the switch is in the ON state when the 2-dimensional mouse staying on the working surface. Another alternative method for a mouse working only on a plane surface (e.g., xy plane) is to use an inertial sensor or displacement sensor detecting the 3$^{rd}$ dimension (e.g., z axis) movement. If the mouse leaves off the working table surface, the mouse movement in the 3$^{rd}$ dimension can be detected by the said sensor above and the displacement calculation is stop to seize the cursor or mouse movement in the screen when the 3$^{rd}$ dimension movement is greater than a present threshold. two methods mentioned above can allow a 2-dimentionl mouse working on a plane surface smoothly without interfering by the 3$^{rd}$ dimension movement resulting in the unwanted movement affected by the gravity force due to the tilt of the 2-dimensional mouse hanging on a 3-dimensional space.

Since the present invention is a tremendous step in society's development, patent is hereby applied for the six basic principles to protect the inventor. The present invention is classified under conceptual patent with a broader range but is also, so far, the only successful and practical invention using an inertial sensor in the manufacturing of computer mice in the whole world. In this case, the inventor has the right to apply for patent for these six basic principles such that these principles can be developed and inertial computer mice invented for better service in the society.

**Claims**

1. A kind of highly sensitive inertial mouse mainly including collecting of data, noise cancellation, setting of threshold of dead zone, tracing of baseline, calculation of displacement and adjustment of sensitivity as signal processing methods as **characterized**:

   collecting of data - the signal provided by the inertial sensor, amplifier and the analog-to-digital converter is transferred to an accurate acceleration data for further signal processing;
   noise cancellation - use all kinds of noise cancellation techniques in order to highly decrease internal and external noise and increase sensitivity;
   setting of threshold of dead zone - set at the upper and lower range of the baseline at zero acceleration such that the acceleration noise within the threshold cannot be used for displacement calculation, put acceleration and displacement to be zero and the zone within the threshold is known as the dead zone and unnecessary jitters caused by noise are eliminated in the dead zone; the setting of the threshold can be static and dynamic;
   tracing of baseline - use all kinds of techniques for dynamic tracing of baseline of inertial sensor at zero acceleration in order to eliminate drift movement of the baseline of the inertial sensor itself and caused by variations in the mouse operation surface such as to avoid miscalculations and unexpected displacements;
   calculation of displacement - calculation of displacement starts as soon as signal exits the threshold of dead zone and setting of threshold of dead zone is cancelled whether the succeeding signal is in or out the threshold of dead zone and many kinds of techniques are applied to detect if the action is completed to return to setting of threshold of dead zone; one inertial sensor can only detect translational acceleration and is only appropriate to exactly calculate translational displacement and it is necessary to further detect angular acceleration in order to calculate non-translational displacement or the displacement containing angular acceleration;
   adjustment of sensitivity - a transfer function is set between the inertial displacement and the computer's cursor such that a small movement range of the inertial mouse can be relatively shown as a large movement range on the computer's screen and with high resolution.

2. As mentioned in claim 1 of a highly sensitive inertial mouse, wherein data collecting is to take the frequency signal obtained from analog-to-digital converter and apply counting method to collect content from the counter at a certain fixed time in order to get acceleration data for further signal processing.

3. As mentioned in claim 1 of a highly sensitive inertial mouse, wherein data collecting is to take the pulse width signal obtained from analog-to-digital converter and apply counting method in order to convert pulse width to digital data signal for further acceleration calculation and signal processing.

4. As mentioned in claim 1 of a highly sensitive inertial mouse, wherein data collecting is to transform digital serial signal obtained from analog-to-digital converter into parallel signal whereby data is collected for further acceleration calculation and signal processing.

5. As mentioned in claim 1 of a highly sensitive inertial mouse, wherein data collecting is to collect the data from the digital parallel signal obtained from analog-to-digital converter for further acceleration calculation and signal processing.

6. As mentioned in claim 1 of a highly sensitive inertial mouse, wherein noise cancellation uses averaging technique and integrates two or more data to obtain an average value for noise cancellation.

7. As mentioned in claim 1 of a highly sensitive inertial mouse, wherein noise cancellation uses a filter to eliminate high or low frequency noise such as to increase signal-to- noise ratio.

8. As mentioned in claim 1 of a highly sensitive inertial mouse, wherein the static setting of dead zone can be fixedly set at the threshold of dead zone at the upper and lower range of the baseline and the inertial acceleration signal within the threshold is enforced to be zero acceleration.

9. As mentioned in claim 1 of a highly sensitive inertial mouse, wherein the dynamic setting of threshold of dead zone can be set at upper and lower range of baseline according to the changes in noise magnitude and the acceleration signal within the threshold is enforced to be zero acceleration.

10. As mentioned in claim 9 of a highly sensitive inertial mouse, wherein the dynamic threshold can be set as more than or equal to double of standard deviation of noise and if it approaches zero, the value is then enforced to be fixed at a constant.

11. As mentioned in claim 1 of a highly sensitive inertial mouse, wherein the tracing of baseline can use static or dynamic window of two inertial data or more in order to obtain the acceleration data within the threshold of dead zone and applying the first-in-first-out method to enter acceleration data into the window and calculating the average value of data from window as zero acceleration of baseline.

12. As mentioned in claim 1 of a highly sensitive inertial mouse, wherein the tracing of baseline can be made according to the characteristic of the inertial signal having symmetrical area within the upper and lower zone of the baseline or the tiny signal variation within the dead zone (for example, the changing rate of inertial signal), the baseline is retraced after location change of inertial mouse, obviating the phenomenon of variation in baseline surpassing the threshold of dead zone caused by rough operation surface such that the inertial mouse can operate normally under high sensitive detection.

13. As mentioned in claim 1 of a highly sensitive inertial mouse, wherein tracing function is repressed as soon as movement displacement occurs and tracing of baseline starts again when the inertial signal has the almost symmetrical area at the upper and lower range of baseline and the change in the inertial signal is smaller than the multiple of noise standard deviation, if the inertial signal subtracting the saved baseline obtained before the movement displacement occurs still surpasses threshold of dead zone, the saved baseline should be abandoned and the window tracing method mentioned in claim 11 should be applied for tracing of new baseline such that the inertial mouse can operate normally under high sensitive detection.

14. As mentioned in claim 1 of a highly sensitive inertial mouse, wherein displacement calculation can be done according to zone labeling method and when inertial acceleration signal leaves the threshold of dead zone for the first time, the zone label changes from 0 to 1, the label changes to 2 according to the symmetrical characteristic of inertial signal (re-enter the threshold of dead zone) and 3 (leaving the threshold of dead zone for the second time and entering the upper or lower symmetrical zone), when the inertial signal re-enters the threshold of dead zone, the zone label changes from 3 to 0 and when zone label is 0, no displacement calculation is done but tracing of baseline and threshold of dead zone is proceeded, when zone label is not 0, displacement calculation is processed but not tracing of baseline and threshold of dead zone.

15. As mentioned in claim 1 of a highly sensitive inertial mouse, wherein a sign label is needed for setting of zone label of displacement calculation in order to solve the problem of a large signal change causing signal not to stop in zone 2, when zone label is 1 and sign labels of inertial signal changes from positive to negative or from negative to positive, the zone label is enforced as 3 meaning that signal did not stay at zone 2 and went directly to zone 3 such that zone label can operate normally.

16. As mentioned in claim 1 of a highly sensitive inertial mouse, wherein: the translational displacement of displacement calculation can directly consider the inertial signal as translational acceleration can directly apply familiar integral formula to calculate each dimensional displacement.

17. As mentioned in claim 1 of a highly sensitive inertial mouse, wherein the non-translational displacement or the displacement containing angular acceleration of the displacement calculation the signal detected by the inertial sensor can be treated as translational acceleration, but gyroscope has to be further used to directly detect angular acceleration or use other inertial sensors and placing them at a certain distance on an axis of the coordinate axis to indirectly calculate angular acceleration whose familiar formulae need mutual deduction of two inertial signals located in an coordinate axis, then use the angular acceleration to revise the said translational acceleration above in order to obtain correct translational displacement in each dimension.

18. As mentioned in claim 1 of a highly serisitive inertial mouse, wherein the adjustment of sensitivity is to separate the transfer function of the inertial mouse displacement and the screen cursor displacement into several transfer zones with independent transfer function including a dead zone, linear zone, non-linear zone, displacement limiting zone such that the inertial mouse can be immobile in the dead zone; and maintain a high sensitivity in the displacement linear zone, in the non-linear zone, the displacement can be greatly enlarged non-linearly; in the displacement limiting zone, a highly unstable and sensitive displacement conversion can be prevented in order to match habit of computer users.

19. As mentioned in claim 18 of a highly sensitive inertial mouse, wherein: if adjustment of sensitivity is undertaken under the threshold of dead zone set with acceleration, displacement dead zone is not necessarily set, relatively, if the threshold of dead zone is not set with acceleration, displacement dead zone has to be then set.

20. As mentioned in claim 18 of a highly sensitive inertial mouse, wherein: the number of zone of the adjustment of sensitivity can be increased, decreased, adjusted, or suppressed depending on the quality of the inertial detection characteristics for a most comfortable use of human.

21. As mentioned in claim 18 of a highly sensitive inertial mouse, wherein: the transfer function in each transfer zone can use adaptive techniques or pseudo-neural network learning technique to adapt or learn human habits for a best personal transfer function and a most comfortable inertial mouse use.

22. As mentioned in claim 1 of a highly sensitive inertial mouse, wherein: six said processing principles (collecting of data, noise cancellation, setting of threshold of dead zone, tracing of baseline, calculation of displacement and adjustment of sensitivity) can be used in 1-,2-,3-dimensional displacement detection.

23. As mentioned in claim 22 of a highly sensitive inertial mouse, wherein: six said signal processing principles (collecting of data, noise cancellation, setting of threshold of dead zone, tracing of baseline, calculation of displacement and adjustment of sensitivity) use in 2-dimensional mouse working on a plane surface, a click or on/off switch is used to automatically determine whether the 2-dimensional mouse leaves off the working plane surface or not, if yes (switch is in off state), the displacement calculation stops and the cursor or mouse in the screen cannot move; if no, as the switch in the on state, the 2-dimensional mouse works normally on the working surface.

24. As mentioned in claim 22 of a highly sensitive inertial mouse, wherein: six said signal processing principles (collecting of data, noise cancellation, setting of threshold of dead zone, tracing of baseline, calculation of displacement and adjustment of sensitivity) use in 2-dimensional mouse working on a plane surface, an inertial sensor or displacement sensor is used to detect the $3^{rd}$ dimensional movement, if the 2-dimensional mouse leaves off the working plane surface and the $3^{rd}$ dimension movement detected by the inertial sensor or displacement sensor is greater than a present threshold, the cursor or mouse in the screen stops moving.

**FIG. 1**

**FIG. 2**

**FIG. 3**

**FIG. 4**

**FIG. 5**

FIG. 6

**FIG. 7**

**FIG. 8**

**FIG. 9**

**European Patent Office**

**EUROPEAN SEARCH REPORT**

Application Number

EP 05 00 9141

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 181 181 A (GLYNN ET AL) 19 January 1993 (1993-01-19) * column 3, line 3 - column 4, line 19 * * column 5, line 3 - column 12, line 18 * * figures 1-10 * ----- | 1-24 | G06F3/033 |
| A,D | US 4 787 051 A (OLSON ET AL) 22 November 1988 (1988-11-22) * the whole document * ----- | 1-24 | |
| A | US 6 112 161 A (DRYDEN ET AL) 29 August 2000 (2000-08-29) * abstract * * column 2, line 58 - column 4, line 20 * ----- | 1 | |
| A | US 2002/135563 A1 (CANAKAPALLI SRI K) 26 September 2002 (2002-09-26) * abstract * ----- | 1 | |
| | | | TECHNICAL FIELDS SEARCHED (Int.Cl.7) G06F |

The present search report has been drawn up for all claims

| Place of search | Date of completion of the search | Examiner |
|---|---|---|
| Berlin | 31 August 2005 | de la Torre, D |

EPO FORM 1503 03.82 (P04C01)

## ANNEX TO THE EUROPEAN SEARCH REPORT
## ON EUROPEAN PATENT APPLICATION NO.

EP 05 00 9141

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2005

| Patent document cited in search report | | Publication date | Patent family member(s) | | Publication date |
|---|---|---|---|---|---|
| US 5181181 | A | 19-01-1993 | JP | 6501119 T | 27-01-1994 |
| | | | WO | 9206465 A1 | 16-04-1992 |
| US 4787051 | A | 22-11-1988 | NONE | | |
| US 6112161 | A | 29-08-2000 | DE | 19837910 A1 | 01-04-1999 |
| | | | GB | 2329475 A ,B | 24-03-1999 |
| | | | JP | 11153588 A | 08-06-1999 |
| US 2002135563 | A1 | 26-09-2002 | CN | 1514986 A | 21-07-2004 |
| | | | JP | 2004525460 T | 19-08-2004 |
| | | | TW | 589566 B | 01-06-2004 |
| | | | WO | 02077916 A2 | 03-10-2002 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4787051 A